Europäisches Patentamt

European Patent Office

Office européen des brevets

(19)

(11) Publication number: **0 164 318**
**A2**

(12) # EUROPEAN PATENT APPLICATION

(21) Application number: **85830110.4**

(22) Date of filing: **08.05.85**

(51) Int. Cl.⁴: **F 16 B 23/00**

(30) Priority: **10.05.84 IT 5335284 U**

(43) Date of publication of application: **11.12.85**
**Bulletin 85/50**

(84) Designated Contracting States: **DE FR GB SE**

(71) Applicant: **FIAT AUTO S.p.A., Corso Giovanni Agnelli 200, I-10135 Torino (IT)**

(72) Inventor: **Mussetto, Domenico, Corso Onorio Lisa 5 BIS, I-10020 Camblano (IT)**

(54) Screw or bolt with head for multi-tool use.

(57) This invention concerns a hexagon head screw or bolt with hexagon socket defined by the splines which engage automatic driver bits.

0164318

– 1 –

This invention covers a screw or bolt with head mating with different tools and in particular with an automatic driver bit.

Because of increasing automation of assembly lines it is often necessary to have available screws or bolts that can be tightened both manually and by automatic tools.

Actually, the screw or bolt sometimes is inserted manually and then fully tightened by automatic drivers.

Or it is also necessary that, in view of future repairs of a component, the screws or bolts that secure it can be removed or tightened by manual tools even if they were previously tightened by automatic drivers.

Moreover, depending on the position of the screw or bolt, different types of tools may be needed.

The purpose of this invention is to provide a screw or bolt which meets the above requirements, so that the same type of screw can be used throughout the assembly line and for all the components.

This is obtained by a hexagon head screw or bolt with hexagon socket defined by splines for engaging automatic drivers bits.

Further characteristics and advantages are outlined by the following description referred to the attached drawings given as a non-restricting example of which:

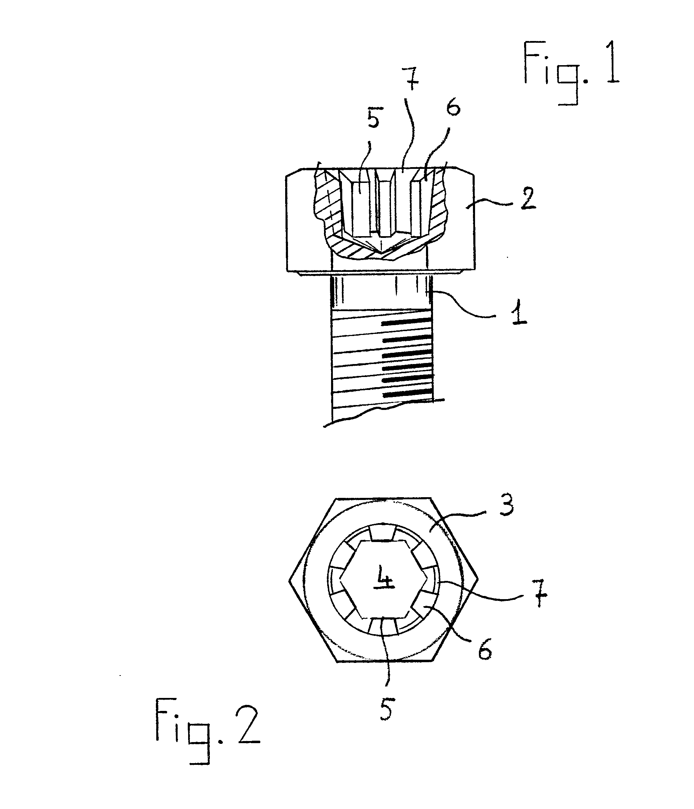

- Fig. 1 is a part section side view of a bolt according to this invention;

- Fig. 2 is a plan view of the bolt shown in Fig. 1.

With regard to the figures, number 1 identifies a threaded bolt with hexagon head 2 featuring top flat surface 3. Hexagon socket 4, coaxial with bolt 1, is obtained in head 2 and is defined by front walls 5 of splines 6 which protrude from round socket 7 so as to form the seat which engages the bits of automatic commercial drivers.

CLAIM

1. Hexagon head screw or bolt with hexagon socket defined by the splines which engage automatic driver bits.

CLAIM

0164318

Fig. 1

Fig. 2